## Europäisches Patentamt
## European Patent Office
## Office européen des brevets

(19)

(11) Publication number: **0 235 322 B1**

# EUROPEAN PATENT SPECIFICATION

(12)

(45) Date of publication of the patent specification:
**24.08.88**

(51) Int. Cl.⁴: **B 26 D 7/30**

(21) Application number: **86102704.3**

(22) Date of filing: **01.03.86**

(54) **Cutting of meat or fish.**

(43) Date of publication of application:
**09.09.87 Bulletin 87/37**

(45) Publication of the grant of the patent:
**24.08.88 Bulletin 88/34**

(84) Designated Contracting States:
**AT BE CH DE FR GB IT LI LU NL SE**

(56) References cited:
**DE - A - 3 106 185**
**DE - B - 2 644 024**
**GB - A - 2 149 650**
**US - A - 2 541 046**
**US - A - 2 799 043**

(73) Proprietor: **FRISCO-FINDUS AG, CH-9400 Rorschach (CH)**

(72) Inventor: **Akesson, Yngve Reinhold, 37, Bankorgårdsgatan, Hälsingborg (SE)**
Inventor: **Olofsson, Mats, Lânggatan 10, S-26500 Astorp (SE)**

## Description

The present invention relates to an apparatus and a process for the automatic cutting of meat or fish produce portions of a predetermined constant weight, comprising a conveyor means suitable for transporting a meat or fish material, a weighing machine and a movable cutting device. Such an apparatus and method are known, for example, from GB-A 2 149 650.

In the production of packaged frozen meat or fish products, it is important that the weight of the portions is controlled as accurately as possible, otherwise the weights will vary at the time of filling the packages resulting in certain disadvantages: underweight portions of incorrect weight have to be rejected leading to significant losses of fish or meat material while overweight portions have to be adjusted to the correct weight, which increases the costs.

The most reliable way of ensuring a constant weight is by cutting and weighing the portions manually. However, this is labour intensive and very time-consuming. Mechanical means for automatic and semi-automatic cutting and weighing of portions have been described but these generally involve the use of very complex machinery. For example, the use of photoelectric sensors has been proposed to detect the linear measurements of fish but since not only the length, but also the breadth and thickness vary appreciably, this method would not lead to the cutting of portions with an accurate constant weight.

We have now developed an extremely simple apparatus and method which, surprisingly, enables portions to be cut automatically having a predetermined constant weight. This method provides labour savings when compared with manual methods and there is no loss in yield owing to underweight portions having to be rejected.

Accordingly, the present invention provides an apparatus for the automatic cutting of meat or fish material to produce portions of a predetermined constant weight, comprising a conveyor means suitable for transporting a meat or fish material a weighing machine and a movable cutting device characterised in that the conveyor means is composed of a pair of adjacent parallel conveyors, the meat or fish material lying partly on each conveyor and in that the parallel conveyors are adapted to travel in the same direction at substantially the same speed and that at least part of one of the parallel conveyors is adapted to form the load-bearing platform of the weighing machine, the weighing machine being adapted to weigh the material on the load-bearing platform and the cutting device being adapted to move transversely relative to the direction of movement of the conveyors to cut the material parallel to the direction of movement, the direction and distance of the transverse movement being controlled by the weight recorded on the weighing machine.

The parallel conveyors conveniently comprise endless belts. The parallel conveyor at least part of which is adapted to form the load-bearing platform of the weighing machine may comprise one or more endless conveyor belts, one of which forms the load-bearing platform. Conveniently, this belt is fixed to the weighing machine via the axles of the rollers.

The adjacent parallel conveyors are preferably separated by a short distance so that there is a gap between them. The presence of this gap helps to eliminate the weight influence caused by any vertical or horizontal change of distance, or any speed difference between the two conveyors. The product has a natural elasticity and the elastic zone of the product in the gap between the two conveyors helps to eliminate this weight influence. Generally, the width of the gap may conveniently be from about 20 to 70 mm, more usually from 25 to 60 mm, preferably from 30 to 55 mm and especially from 35 to 51 mm. The optimum width of the gap depends a great deal on how precisely the mechanical construction of the weighing system has been effected and, clearly, a very precisely manufactured unit will be able to record a more accurate weight with a narrow gap than with a wide gap between the conveyors.

The weighing machine is conveniently of the type consisting of continuously working scales based on load cells and is preferably a spring balance. We have found, surprisingly, that the weighing machine gives a very reliable reading of the weight of that part of the meat or fish material on the load-bearing platform.

The movement of the cutting device may be achieved by a motor provided with a control device which records the weight and actuates the motor which causes the cutting device to move in either direction transversely before stopping in the appropriate position to cut the meat or fish material at the correct point. Although any kind of cutting means may be used, for example, jet cutting, a circular saw is preferred.

A further conveyor is conviently provided immediately after the cutting device to transport the cut material away.

The present invention also provides a process for the automatic cutting of meat or fish material to produce portions of a predetermined constant weight which comprises placing a meat or fish material onto the infeed end of a conveyor means, weighing this meat or fish material with a weighing machine and then cutting the material with a cutting device characterised in that the meat or fish material is placed on a pair of adjacent parallel conveyors travelling in the same direction substantially at the same speed so that the material lies partly on each conveyor, at least part of one conveyor being adapted to form the load-bearing platform of the weighing machine which records the weight of the material advancing on the load-bearing platform after which the material is cut by the movable cutting device adapted to move transversely relative to the direction of movement of the conveyors, the direction and distance of the transverse movement being controlled by the weight recorded on the weighing machine.

The meat or fish material is conveniently placed on the adjacent parallel conveyors manually so that the desired approximate weight of that part of the material which will form the portion having a predetermined weight lies substantially on the conveyor at least part of which is adapted to form the load-bearing platform of the weighing machine, conveniently by ensuring that the material contacts a fixed guide fitted in the appropriate position on top of this latter conveyor.

The present invention is applicable to meat and fish materials of all sizes and shapes, for example cod or salmon. The invention is particularly suitable for cutting cod tails having a weight between about 100 g to 175 g.

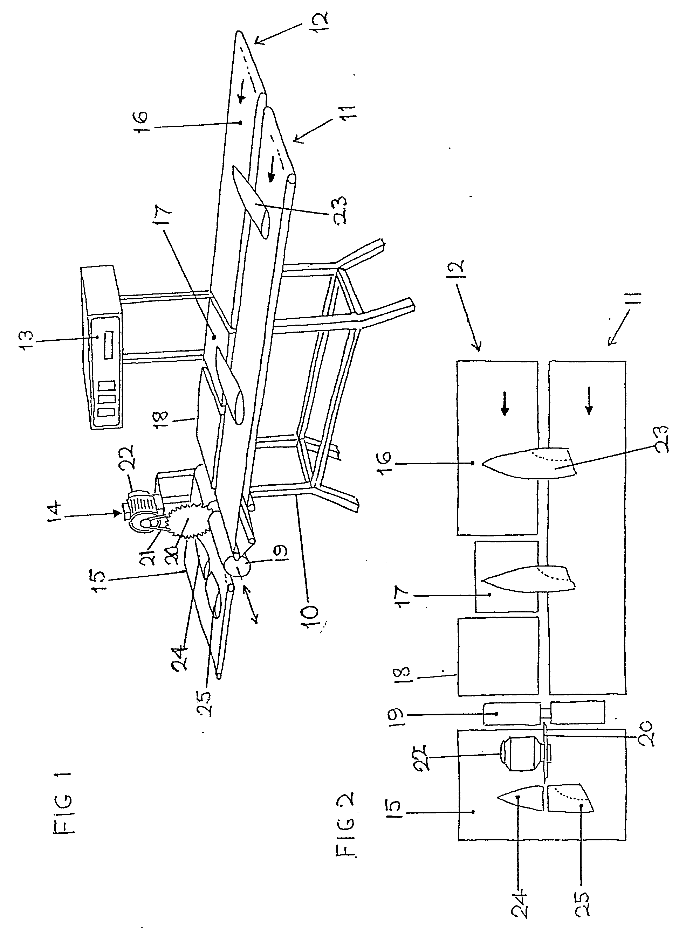

The present invention will now be illustrated by way of example with reference to the accompanying drawings in which Figure 1 represents a perspective view of the apparatus and Figure 2 represents a top plan view of the apparatus.

Referring to the drawings, the apparatus comprises a supporting table 10, parallel conveyors 11 and 12 separated by a gap of 40 mm width, a check weighing machine 13, a movable cutter 14 and an endless belt 15. The conveyor 11 is a single endless belt while the conveyor 12 comprises three successive endless belts, an infeed belt 16, a belt which forms the load-bearing platform 17 of the weighing machine 13 and an outfeed belt 18. The movable cutter comprises a roller 19 capable of moving back and forth in the direction of the arrow, a circular saw 20 attached by a band 21 to a step motor 22.

In operation, fillets of cod 23 are placed manually onto the parallel belts 11 and 12 at the infeed end so that approximately 120 g of the tail end lies on belt 16. This is achieved by placing the fillet so that the end of the tail of each fillet touches a fixed guiding bar (not shown) fitted on top of the belt 16. The cod fillets 22 advance in the direction of the arrows and on reaching the belt 17 the weight of the tail end is recorded. A signal actuates the step motor 22 provided with a control device (not shown) which causes the movable cutter 14 to travel the appropriate distance transversely to the direction of movement of the parallel belts 11 and 12 so that the cutter is in the correct position for cutting the cod fillets so that on traversing the roller 19 the tail portions 24 each weighing 120 g are separated from the remaining cod fillet 25 whereupon the separated portions advances to the endless belt 15 where they are transported away for further processing.

## Claims

1. An apparatus for the automatic cutting of meat or fish material (23) to produce portions (24) of a predetermined constant weight, comprising a conveyor means suitable for transporting a meat or fish material (23), a weighing machine (13) and a movable cutting device (14) characterised in that the conveyor means is composed of a pair of adjacent parallel conveyors (11, 12), the meat or fish material (23) lying partly on each conveyor (11, 12) in that the parallel conveyors (11, 12) are adapted to travel in the same direction at substantially the same speed and that at least part (17) of one (12) of the parallel conveyors is adapted to form the load-bearing platform (17) of the weighing machine (13), the weighing machine (13) being adapted to weigh the material (23) on the load-bearing platform (17) and the cutting device (14) being adapted to move transversely relative to the direction of movement of the conveyors to cut the material (23) parallel to the direction of movement, the direction and distance of the transverse movement being controlled by the weight recorded on the weighing machine (13).

2. An apparatus according to claim 1 characterised in that the parallel conveyor (12) at least part of which is adapted to form the load-bearing platform (17) of the weighing machine (13) comprises at least two endless conveyor belts (16, 17, 18) one of which forms the load-bearing platform (17).

3. An apparatus according to claim 1 characterised in that the adjacent parallel conveyors (11, 12) are separated by a short distance so that there is a gap between them.

4. An apparatus according to claim 3 characterised in that the width of the gap is from 30 to 55 mm.

5. An apparatus according to claim 1 characterised in that the weighing machine (13) is a spring balance.

6. An apparatus according to claim 1 characterised in that the cutting device (14) comprises a circular saw (20).

7. A process for the automatic cutting of meat or fish material (23) to produce portions (24) of a predetermined constant weight which comprises placing a meat or fish material (23) onto the infeed end of a conveyor means, weighing this meat or fish material (23) with a weighing machine (13) and then cutting the material (23) with a cutting device (14) characterised in that the meat or fish material (23) is placed on a pair of adjacent parallel conveyors (11, 12) travelling in the same direction substantially at the same speed so that the material (23) lies partly on each conveyor (11, 12) at least part (17) of one conveyor (12) being adapted to form the load-bearing platform (17) of the weighing machine (13) which records the weight of the material (23) advancing on the load-bearing platform (17) after which the material is cut by the movable cutting device (14) adapted to move transversely relative to the direction of movement of the conveyors (11, 12), the direction and distance of the transverse movement being controlled by the weight recorded on the weighing machine (13).

8. A process according to claim 7 characterised in that the meat or fish material (23) is placed on the adjacent parallel conveyors (11, 12) manually so that the desired approximate weight of that part of the material (23) which will form the portion (24) having a predetermined weight lies substantially on the conveyor (12) at least part of which is adapted to form the load-bearing platform (17) of the weighing machine (13).

9. A process according to claim 8 characterised in that it is ensured that the material (23) contacts a fixed guide fitted in the appropriate position on top of the conveyor (12) at least part of which is adapted to form the load-bearing platform (17) of the weighing machine (13).

## Patentansprüche

1. Vorrichtung zum automatischen Schneiden von Fleisch- oder Fischmaterial (23) zur Erzeugung von Portionen (24) mit einem vorbestimmten konstanten Gewicht, mit einer Fördereinrichtung für den Transport eines Fleisch- oder Fischmaterials (23), einer Waage (13) und einer bewegbaren Schneideinrichtung (14), dadurch gekennzeichnet, dass die Fördereinrichtung aus einem Paar von benachbarten parallelen Förderern (11, 12) gebildet ist, wobei das Fleisch- oder Fischmaterial (23) teilweise auf jedem der Förderer (11, 12) liegt, und dass die parallelen Förderer in der gleichen Richtung mit im wesentlichen der gleichen Geschwindigkeit bewegbar sind und zumindest ein Teil (17) eines (12) der parallelen Förderer als lastaufnehmende Tafel (17) der Waage (13) ausgebildet ist, wobei die Waage (13) zum Wägen des Materials (23) auf der lastaufnehmende Tafel (17) ausgebildet ist und die Schneideinrichtung (14) quer zur Bewegungsrichtung der Förderer bewegbar ist, um das Material (23) parallel zur Bewegungsrichtung zu schneiden, wobei die Richtung und das Ausmass der Querbewegung durch das auf der Waage ermittelte Gewicht gesteuert werden.

2. Vorrichtung nach Anspruch 1, dadurch gekennzeichnet, dass jener parallele Förderer (12), von welchem zumindest ein Teil als lastaufnehmende Tafel (17) der Waage (13) ausgebildet ist, zumindest zwei endlose Förderbänder (16, 17, 18) aufweist, von denen eines die laustaufnehmende Tafel (17) bildet.

3. Vorrichtung nach Anspruch 1, dadurch gekennzeichnet, dass die benachbarten parallelen Förderer (11, 12) kleinen gegenseitigen Abstand haben, so dass zwischen ihnen ein Spalt vorhanden ist.

4. Vorrichtung nach Anspruch 3, dadurch gekennzeichnet, dass die Spaltbreite zwischen 30 und 55 mm beträgt.

5. Vorrichtung nach Anspruch 1, dadurch gekennzeichnet, dass die Waage (13) eine Federwaage ist.

6. Vorrichtung nach Anspruch 1, dadurch gekennzeichnet, dass die Schneideinrichtung (14) eine Kreissäge (20) aufweist.

7. Verfahren zum automatischen Schneiden von Fleisch- oder Fischmaterial (23) zur Erzeugung von Portionen (24) mit einem vorbestimmten konstanten Gewicht, bei welchem ein Fleisch- oder Fischmaterial (23) auf das Beschikkungsende einer Fördereinrichtung aufgebracht wird, dieses Fleisch- oder Fischmaterial (23) mittels einer Waage (13) gewogen und das Material (23) sodann mittels einer Schneideinrichtung (14) geschnitten wird, dadurch gekennzeichnet, dass das Fleisch- oder Fischmaterial (23) auf einem Paar von benachbarten parallelen Förderern (11, 12), die in der gleichen Richtung mit im wesentlichen der gleichen Geschwindigkeit bewegt werden, so angeordnet wird, dass das Material (23) teilweise auf jedem Förderer (11, 12) liegt, wobei zumindest ein Teil (17) des einen Förderers (12) als lastaufnehmende Tafel (17) der Waage (13) ausgebildet ist, welche das Gewicht des auf der lastaufnehmenden Tafel (17) vorwärts bewegten Materials (23) ermittelt, worauf das Material mittels der quer zur Vorschubrichtung der Förderer (11, 12) bewegbaren Schneideinrichtung (14) geschnitten wird, wobei die Richtung und das Ausmass der Querbewegung durch das auf der Waage (13) ermittelte Gewicht gesteuert werden.

8. Verfahren nach Anspruch 7, dadurch gekennzeichnet, dass das Fleisch- oder Fischmaterial (23) auf die benachbarten parallelen Förderer (11, 12) von Hand aufgebracht wird, so dass das erwünschte ungefähre Gewicht jenes Teiles des Materials (23), welcher zur Bildung der Portion (24) mit vorbestimmtem Gewicht bestimmt ist, im wesentlichen auf jenem Förderer (12) liegt, von dem zumindest ein Teil die lastaufnehmende Tafel (17) der Waage (13) bildet.

9. Verfahren nach Anspruch 8, dadurch gekennzeichnet, dass sichergestellt wird, dass das Material (23) eine feststehende Führung berührt, die in der entsprechenden Position an der Oberseite jenes Förderers (12) montiert ist, von dem zumindest ein Teil die laustaufnehmende Tafel (17) der Waage (13) bildet.

## Revendications

1. Appareil pour le découpage automatique de viande ou de poisson (23) afin de produire des portions (24) d'un poids constant et prédéterminé, comprenant des moyens transporteurs convenant au transport de viande ou de poisson (23), une machine à peser (13) et un dispositif mobile (14) de coupe, caractérisé en ce que les moyens transporteurs sont constitués d'une paire de transporteurs parallèles adjacents (11, 12), la viande ou le poisson (23) s'étendant partiellement sur chacun des transporteurs (11, 12), et en ce que les transporteurs parallèles (11, 12) sont conçus pour se déplacer dans le même sens, sensiblement à la même vitesse, et en ce qu'au moins une partie (17) de l'un (12) des transporteurs parallèles est conçue pour former le plateau porte-charge (17) de la machine à peser (13), la machine à peser (13) étant conçue pour peser la matière (23) sur le plateau porte-charge (17) et le dispositif de coupe (14) étant conçu pour se déplacer transversalement à la direction du mouvement des transporteurs afin de couper la matière (23) parallèlement à la direction du mouvement, le sens et la distance du mouvement transversal étant commandés par le poids enregistré sur la machine à peser (13).

2. Appareil selon la revendication 1, charactérisé en ce que le transporteur parallèle (12) dont au moins une partie est conçue pour former le plateau porte-charge (17) de la machine à peser (13) comprend au moins deux bandes transporteuses sans fin (16, 17, 18) dont l'une forme le plateau porte-charge (17).

3. Appareil selon la revendication 1, caractérisé en ce que les transporteurs parallèles adjacents (11, 12) sont séparés par une courte distance afin qu'il existe un intervalle entre eux.

4. Appareil selon la revendication 3, caractérisé en ce que la largeur de l'intervalle est de 30 à 55 mm.

5. Appareil selon la revendication 1, caractérisé en ce que la machine à peser (13) est une balance à ressort.

6. Appareil selon la revendication 1, caractérisé en ce que le dispositif de coupe (14) comprend une scie circulaire (20).

7. Procédé de découpage automatique de viande ou de poisson (23) pour produire des portions (24) d'un poids constant et prédéterminé, qui consiste à placer de la viande ou du poisson (23) sur l'extrémité de chargement de moyens transporteurs, à peser cette viande ou ce poisson (23) avec une machine à peser (13), puis à découper la matière (23) avec un dispositif de coupe (14), caractérisé en ce que la viande ou le poisson (23) est placé sur une paire de transporteurs parallèles et adjacents (11, 12) se déplaçant dans le même sens, sensiblement à la même vitesse de manière que la matière (23) repose partiellement sur chacun des transporteurs (11, 12), au moins une partie (17) d'un transporteur (12) étant conçue pour former le plateau porte-charge (17) de la machine à peser (13) qui enregistre le poids de la matière (23) avançant sur le plateau porte-charge (17), après quoi la matière est coupée par le dispositif mobile (14) de coupe conçu pour se déplacer transversalement à la direction du mouvement des transporteurs (11, 12), le sens et la distance du mouvement transversal étant commandés par le poids enregistré sur la machine à peser (13).

8. Procédé selon la revendication 7, caractérisé en ce que la viande ou le poisson (23) est placé à la main sur les transporteurs parallèles et adjacents (11, 12) afin que le poids approximatif souhaité de la partie de la matière (23) qui formera la portion (24) ayant un poids prédéterminé s'étende sensiblement sur le transporteur (12) dont au moins une partie est conçue pour former le plateau porte-charge (17) de la machine à peser (13).

9. Procédé selon la revendication 8, caractérisé en ce qu'on s'assure que la matière (23) entre en contact avec un guide fixe monté dans la position appropriée sur le dessus du transporteur (12) dont au moins une partie est conçue pour former le plateau porte-charge (17) de la machine à peser (13).

FIG 1

FIG 2